# EUROPEAN PATENT APPLICATION

(11) **EP 3 346 670 A1**
(43) Date of publication of application: **11.07.2018**
(21) Application number: 16779418.9
(22) Date of filing: 22.01.2016
(51) Int. Cl.: H04L 29/08

(54) **METHOD FOR PROTECTING MACHINE TYPE COMMUNICATION DEVICE, NETWORK ENTITY, AND MTC DEVICE**

(30) Priority: 02.09.2015 CN 201510556461
(71) Applicant: ZTE Corporation, Shenzhen, Guangdong 518057 (CN)
(72) Inventor: YU, Wantao, Shenzhen Guangdong 518057 (CN)
(74) Representative: Lavoix
(86) International application number: PCT/CN2016/071789
(87) International publication number: WO 2016/165443

(57) **Abstract**

Disclosed are a method for protecting a machine type communication device, a network entity, and a machine type communication (MTC) device service capability opening functional entity. The method comprises: after a network entity authenticates an external application, establish a security association between the external application and an MTC device according to a preset rule; and the network entity sends the security association between the external application and the MTC device to the corresponding MTC device, so as to determine, by means of the security association between the external application and the MTC device, the MTC device that can be accessed by the external application under authorization.

## Description

### TECHNICAL FIELD

The invention relates to a Machine Type Communication (MTC) technology for an Internet of things communication system, and particularly to a method for protecting an MTC device in a service capability exposure architecture, a network entity, a Service Capability Exposure Function (SCEF) and an MTC system including the MTC device under the service capability exposure architecture.

### BACKGROUND

The inventor of the application finds in a process of implementing the technical solutions of embodiments of the application that there are at least the following technical problems in a related technology.

Communication in a future communication network will be dominated by communication between devices and devices and between devices and data centers. A storage technology which gets cheaper and cheaper may make it possible for a man and a device to obtain massive information. Along with development of a chip processing capability and a real-time online technology, a device will become a main participant in mobile communication in the future. Machine-to-machine communication refers to a generic term of an application communication technology, a series of technologies implementing data communication and exchange between a machine and a machine and between a machine and a man and a combination thereof.

Since MTC integrates a communication technology and an information technology and may be configured for two-way communication, for example, long-distance information collection, parameter setting and instruction sending, different application solutions may be implemented, for example, safety monitoring, automatic vending and goods tracking. Thus it can be seen that almost all devices involved in daily life may become potential service objects.

In an MTC system, a network operating company may provide value-added service for an external application provider. The value-added service may be provided for an external application to use through an SCEF. In addition, the operating company may also combine various internal and external services and a network capability of the operating company to provide various kinds of Application Programming Interface (API) service for participants of MTC services. Under a service capability exposure architecture, the SCEF is required to manage security associations between external applications and MTC device, thereby ensuring that only an authorized external application may acquire information of the specified MTC device. In the MTC system, an MTC device is usually used for a specified application field, so that the MTC device is usually associated with a specified external application. An external application in a specified application field can only acquire information of a corresponding authorized MTC device in the application field. However, in practical use, an authorized external application which passes authentication may deliberately acquire information of an unauthorized MTC device based on a legal security association, which may threaten security of the other MTC device in the MTC system.

At present, technical ideas adopted by solutions to illegal acquisition of an authorized external application in an SCEF architecture over information of an unauthorized MTC device are as follows. If an SCEF is a core network entity in an MTC system, an NDS/IP security mechanism is adopted. If the SCEF is not the core network entity in the MTC system, a Tsp interface security mechanism or an MB2 interface security mechanism is adopted. These solutions are network-based solutions, which require a network to manage MTC devices and external applications. In the MTC system, there are a large number of MTC devices, the number of the MTC devices dynamically changes, and there is always a large number of MTC devices joining or quitting. Therefore, the network may manage and maintain the MTC devices and the external applications by consuming a large quantity of resources. Under a service capability exposure architecture, how to design a distributed security solution for MTC device information protection is a technical problem urgent to be solved at present.

### SUMMARY

In view of the above, the embodiments of the invention are intended to provide a method for protecting an MTC device in a service capability exposure architecture, a network entity, an SCEF and an MTC system including the MTC device under the service capability exposure architecture, which at least implement a distributed solution for MTC device information protection under the service capability exposure architecture.

The technical solutions of the embodiments of the invention are implemented as follows.

The embodiments of the invention provide a method for protecting an MTC device, which may be applied to an MTC system including the MTC device under a service capability exposure architecture. A network entity establishes a security association between an external application and the MTC device according to a preset rule after authenticating the external application. The network entity sends the security association between the external application and the MTC device to the MTC device to determine that the MTC device is authorized for the external application to access based on the security association between the external application and the MTC device.

In the solution, the security association between the external application and the MTC device may be an association relationship between the external application and the MTC device.

In the solution, the security association between the external application and the MTC device may include an association relationship between identification information of the external application and identification information of the MTC device, or a correspondence between the identification information of the external application and user identification information of the MTC device, or a correspondence between the identification information of the external application and identification information of an application on the MTC device.

In the solution, the security association between the external application and the MTC device may be configured to determine that the MTC device is authorized for the external application to access. The security association is established between one external application and one MTC device. Or, the security association is established between one external application and multiple MTC devices.

In the solution, the method may further include that the network entity receives confirmation information fed back by the MTC device, after the MTC device receives and locally stores the security association between the external application and the MTC device from the network entity.

In the solution, the network entity may be any network entity which may be configured to authenticate the external application in a core network. The network entity may include a Mobility Management Entity (MME), or a Serving General Packet Radio Service Support Node (SGSN), or a Home Subscriber Server (HSS), or an MTC-Interworking Function (MTC-IWF), or an MTC service management platform, or an SCEF.

The embodiments of the invention provide a method for protecting an MTC device, which may be applied to an MTC system including the MTC device under a service capability exposure architecture. The MTC device receives a security association between an external application and the MTC device, the security association between the external application and the MTC device being established according to a preset rule after a network entity authenticates the external application. The MTC device locally stores the security association between the external application and the MTC device to determine that the MTC device is authorized for the external application to access based on the security association between the external application and the MTC device.

In the solution, the security association between the external application and the MTC device may be an association relationship between the external application and the MTC device.

In the solution, the security association between the external application and the MTC device may include an association relationship between identification information of the external application and identification information of the MTC device, or a correspondence between the identification information of the external application and user identification information of the MTC device, or a correspondence between the identification information of the external application and identification information of an application on the MTC device.

In the solution, the security association between the external application and the MTC device may be configured to determine that the MTC device is authorized for the external application to access. The security association is established between one external application and one MTC device. Or, the security association is established between one external application and multiple MTC devices.

In the solution, the method may further include that the MTC device feeds back confirmation information to the network entity after receiving and locally storing the security association between the external application and the MTC device from the network entity.

The embodiments of the invention provide a method for protecting a MTC device, which may be applied to an MTC system including the MTC device under a service capability exposure architecture. An SCEF, serving as an interface entity connected with a network entity, receives request information of acquiring information of a specified MTC device from an external application, the request information including identity information of the external application and identity information of the MTC device. The SCEF authenticates the external application according to the identity information of the external application and the identity information of the MTC device, and after authentication succeeds, establishes a security connection between the external application and the SCEF. The SCEF establishes a security association between the external application and the MTC device according to a preset rule to determine that the MTC device is authorized for the external application to access based on the security association between the external application and the MTC device.

In the solution, the method may further include that the SCEF sends the request information received from the external application to the MTC device. After the MTC device verifies that the received information from the external application indicates a legal external application according to the stored security association between the external application and the MTC device and succeeds in verification, the SCEF receives confirmation information fed back by the MTC device.

In the solution, the confirmation information may include information of the MTC device requested by the external application. The SCEF may feed back the requested information of the MTC device to the external application according to the received confirmation information.

In the solution, the security association between the external application and the MTC device may be managed by an MTC user, or an operating company or an application provider.

In the solution, the method may further include that the SCEF notifies the network entity to delete the security association, stored on the MTC device, between the external application and the MTC device through the network entity.

In the solution, the operation that the security association, stored on the MTC device, between the external application and the MTC device, is deleted through the network entity may include that: the network entity receives deletion request information sent by the MTC user, or the operating company or the application provider, the deletion request information including the security association required to be deleted between the external application and the MTC device on the specified MTC device. The network entity sends the deletion request information to the specified MTC device after authenticating the MTC user, or the operating company or the application provider. After receiving the deletion request information sent by the network entity, the specified MTC device checks all security associations, stored on the specified MTC device, between external applications and MTC device, and deletes the corresponding security association between the external application and the MTC device according to the deletion request information. After deletion is completed, the network entity receives deletion confirmation information fed back to the network entity by the specified MTC device.

The embodiments of the invention provide a network entity, which may be applied to an MTC system including an MTC device under a service capability exposure architecture. The network entity includes a first security association establishment unit, configured to establish a security association between an external application and the MTC device according to a preset rule after authenticating the external application; and an authorized device determination unit, configured to send the security association between the external application and the MTC device to the MTC device to determine that the MTC device is authorized for the external application to access based on the security association between the external application and the MTC device.

In the solution, the security association between the external application and the MTC device may be an association relationship between the external application and the MTC device.

In the solution, the security association between the external application and the MTC device may include: an association relationship between identification information of the external application and identification information of the MTC device, or a correspondence between the identification information of the external application and user identification information of the MTC device, or a correspondence between the identification information of the external application and identification information of an application on the MTC device.

In the solution, the security association between the external application and the MTC device may be configured to determine that the MTC device is authorized for the external application to access. The security association is established between one external application and one MTC device. Or, the security association is established between one external application and multiple MTC devices.

In the solution, the authorized device determination unit may include a first receiving subunit, configured to receive confirmation information fed back by the MTC device after the MTC device receives and locally stores the security association between the external application and the MTC device from the network entity.

In the solution, the network entity may be any network entity which may be configured to authenticate the external application in a core network. The network entity may include an MME, or an SGSN, or an HSS, or an MTC-IWF, or an MTC service management platform, or an SCEF.

When executing processing, the first security association establishment unit, the authorized device determination unit and the first receiving subunit may be implemented by a Central Processing Unit (CPU), a Digital Signal Processor (DSP) or a Field-Programmable Gate Array (FPGA).

The embodiments of the invention provide an MTC device, which may include: a second receiving unit, configured to receive a security association between an external application and the MTC device, the security association between the external application and the MTC device being established according to a preset rule after a network entity authenticates the external application; and a storage unit, configured to locally store the security association between the external application and the MTC device in the MTC device to determine that the MTC device is authorized for the external application to access based on the security association between the external application and the MTC device.

In the solution, the security association between the external application and the MTC device may be an association relationship between the external application and the MTC device.

In the solution, the security association between the external application and the MTC device may include: an association relationship between identification information of the external application and identification information of the MTC device, or a correspondence between the identification information of the external application and user identification information of the MTC device, or a correspondence between the identification information of the external application and identification information of an application on the MTC device.

In the solution, the security association between the external application and the MTC device may be configured to determine that the MTC device is authorized for the external application to access. The security association is established between one external application and one MTC device. Or, the security association is established between one external application and multiple MTC devices.

In the solution, the MTC device may further include a feedback unit, configured to feed back confirmation information to the network entity after the MTC device receives and locally stores the security association between the external application and the MTC device from the network entity.

When executing processing, the second receiving unit, the storage unit and the feedback unit may be implemented by a CPU, a DSP or an FPGA.

The embodiments of the invention provide an SCEF, which may be applied to an MTC system including an MTC device under a service capability exposure architecture. The SCEF, serving as an interface entity connected with a network entity, includes a second receiving unit, configured to receive request information of acquiring information of a specified MTC device from an external application, the request information including identity information of the external application and identity information of the MTC device; a security connection establishment unit, configured to authenticate, by the SCEF, the external application according to the identity information of the external application and the identity information of the MTC device, and after authentication succeeds, establish a security connection between the external application and the SCEF; and a first security association establishment unit, configured to establish a security association between the external application and the MTC device according to a preset rule to determine that the MTC device is authorized for the external application to access based on the security association between the external application and the MTC device.

In the solution, the SCEF may further include a second distribution unit, configured to send, by the SCEF, the request information received from the external application to the MTC device; and a second receiving unit, configured to receive confirmation information fed back by the MTC device, after the MTC device verifies that the received information from the external application indicates a legal external application according to the stored security association between the external application and the MTC device and succeeds in verification.

In the solution, the confirmation information may include information of the MTC device requested by the external application. The second distribution unit may further be configured to feed back, by the SCEF, the requested information of the MTC device to the external application according to the received confirmation information.

In the solution, the security association between the external application and the MTC device may be managed by an MTC user, or an operating company or an application provider.

In the solution, the SCEF may further include a notification unit, configured to notify, by the SCEF, the network entity to delete the security association, stored on the MTC device, between the external application and the MTC device through the network entity.

In the solution, the SCEF may perform communication connection with the network entity, the external application and the MTC device, the network entity may include a first receiving unit and a first distribution unit, and the MTC device may include a security association relationship storage and management unit. The first receiving unit may be configured to receive, by the network entity, deletion request information sent by the MTC user, or the operating company or the application provider, the deletion request information including the security association required to be deleted between the external application and the MTC device on the specified MTC device. The first distribution unit may be configured to send the deletion request information to the specified MTC device after the network entity authenticates the MTC user, or the operating company or the application provider. The security association relationship storage and management unit may be configured to, after the specified MTC device receives the deletion request information sent by the network entity, check all security associations, stored on the specified MTC device, between external applications and MTC device, and delete the security association between the external application and the MTC device according to the deletion request information. The first receiving unit may further be configured to, after deletion is completed, receive, by the network entity, deletion confirmation information fed back to the network entity by the specified MTC device.

When executing processing, the second receiving unit, the security connection establishment unit, the first security association establishment unit, the second distribution unit, the second receiving unit, the notification unit, the first receiving unit, the first distribution unit and the security association relationship storage and management unit may be implemented by a CPU, a DSP or an FPGA.

According to the method for protecting the MTC device in the embodiments of the invention, the network entity establishes the security association between the external application and the MTC device according to the preset rule after authenticating the external application; and the network entity sends the security association between the external application and the MTC device to the corresponding MTC device to determine that the MTC device is authorized for the external application to access based on the security association between the external application and the MTC device, so that the external application may only acquire information of the MTC device authorized to access.

With adoption of the embodiments of the invention, since it may be determined that the MTC device is authorized for the external application to access based on the established security association between the external application and the MTC device to enable the external application to acquire the information of the MTC device authorized to access, a distributed security solution for MTC device information protection is well implemented.

### BRIEF DESCRIPTION OF DRAWINGS

FIG. 1 is an implementation flowchart of an embodiment of the invention.
FIG. 2 is a structure diagram of a network entity according to an embodiment of the invention.
FIG. 3 is a schematic diagram of a security association relationship list creation process according to application example one applying an embodiment of the invention.
FIG. 4 is a flowchart of acquiring information of an MTC device by an external application through an SCEF according to application example two applying an embodiment of the invention.
FIG. 5 is a schematic diagram of a security association deletion process according to application example three applying an embodiment of the invention.
FIG. 6 is a schematic diagram of a security management device according to application example four applying an embodiment of the invention.
FIG. 7 is a schematic diagram of a security management system according to application example five applying an embodiment of the invention.

### DETAILED DESCRIPTION

Implementation of the technical solutions will be further described below in combination with the drawings in detail.

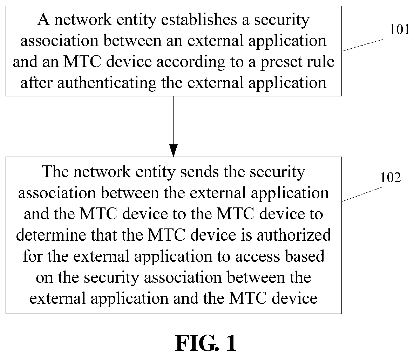

An embodiment of the invention provides a method for protecting an MTC device. As shown in FIG. 1, the method is applied to an MTC system including the MTC device under a service capability exposure architecture. The method includes the following steps.

In Step 101, a network entity establishes a security association between an external application and the MTC device according to a preset rule after authenticating the external application.

Here, the preset rule may be made by an operating company, and the preset rule is notified to the network entity. The preset rule may also be made by the network entity. A purpose of making the preset rule is to establish the security association according to the preset rule, the security association being configured to determine the specific MTC device authorized for the external application to access. Specifically, an authorization range obtained by the external application is determined according to the preset rule. According to a first manner, the preset rule is defined in advance according to a strategy of the operating company or a strategy of an external application provider, and is notified to the network entity. According to a second manner, the network entity correspondingly generates the preset rule by itself according to acquired information of the external application and some mastered information of the MTC device.

In Step 102, the network entity sends the security association between the external application and the MTC device to the corresponding MTC device to determine the MTC device authorized for the external application to access based on the security association between the external application and the MTC device.

With the step, the external application may acquire information of the MTC device authorized to access, thereby implementing security protection over the information of the MTC device through a distributed solving idea. Adopting such a distributed solving idea may effectively reduce use of network resources and a network signaling load.

In an implementation mode of the embodiment of the invention, the security association between the external application and the MTC device is an association relationship between the external application and the MTC device. The association relationship between the external application and the MTC device may specifically be an association relationship between identity information of the external application and identity information of the MTC device, for example, an association relationship between identification information of the external application and the identification information of the MTC device, or a correspondence between the identification information of the external application and user identification information of the MTC device, or a correspondence between the identification information of the external application and identification information of an application on the MTC device.

In an implementation mode of the embodiment of the invention, the security association between the external application and the MTC device is configured to determine the MTC device authorized for the external application to access. The security association is established between one external application and one MTC device. Alternatively, the security association is established between one external application and multiple MTC devices.

In an implementation mode of the embodiment of the invention, the method further includes that the network entity sends the security association between the external application and the MTC device to the corresponding MTC device after authenticating the external application and establishing the security association between the external application and the MTC device.

In an implementation mode of the embodiment of the invention, the method further includes that the network entity sends a generated security association relationship between the external application and the MTC device to the corresponding MTC device after establishing the security association between the external application and the MTC device. After receiving the security association relationship between the external application and the MTC device from the network entity, the MTC device stores the security association relationship on the MTC device, for example, storing on a Universal Integrated Circuit Card (UICC) or storing in a memory on the MTC device. The MTC device may feed back confirmation information to the network entity according to a system requirement after receiving and storing the security association relationship between the external application and the MTC device.

In an implementation mode of the embodiment of the invention, the method further includes that after the corresponding MTC device receives and locally stores the security association between the external application and the MTC device from the network entity, the network entity receives the confirmation information fed back by the corresponding MTC device.

In an implementation mode of the embodiment of the invention, the network entity is: any network entity which may be configured to authenticate the external application in a core network. The network entity includes: an MME, or an SGSN, or an HSS, or an MTC-IWF, or an MTC service management platform, or an SCEF.

An embodiment of the invention provides a method for protecting an MTC device, which is applied to an MTC system including the MTC device under a service capability exposure architecture. The method includes that: the MTC device receives a security association between an external application and the MTC device, the security association between the external application and the MTC device being established according to a preset rule after a network entity authenticates the external application; and the MTC device locally stores the security association between the external application and the MTC device to determine the MTC device authorized for the external application to access based on the security association between the external application and the MTC device.

In an implementation mode of the embodiment of the invention, the security association between the external application and the MTC device is an association relationship between the external application and the MTC device.

In an implementation mode of the embodiment of the invention, the security association between the external application and the MTC device includes: an association relationship between identification information of the external application and identification information of the MTC device, or a correspondence between the identification information of the external application and user identification information of the MTC device, or a correspondence between the identification information of the external application and identification information of an application on the MTC device.

In an implementation mode of the embodiment of the invention, the security association between the external application and the MTC device is configured to determine the MTC device the external application is authorized to access. The security association is established between one external application and one MTC device. Or, the security association is established between one external application and multiple MTC devices.

In an implementation mode of the embodiment of the invention, the method further includes that the MTC device feeds back confirmation information to the network entity after receiving and locally storing the security association between the external application and the MTC device from the network entity.

An embodiment of the invention provides a method for protecting an MTC device, which is applied to an MTC system including the MTC device under a service capability exposure architecture. The method includes that an SCEF, serving as an interface entity connected with a network entity, receives request information of acquiring information of a specified MTC device from an external application, the request information including identity information of the external application and identity information of the MTC device. The SCEF authenticates the external application according to the identity information of the external application and the identity information of the MTC device, and after authentication succeeds, establishes a security connection between the external application and the SCEF. The SCEF establishes a security association between the external application and the MTC device according to a preset rule to determine the MTC device authorized for the external application to access based on the security association between the external application and the MTC device to enable the external application to only acquire the information of the MTC device authorized to access.

In an implementation mode of the embodiment of the invention, the method further includes that the SCEF sends the request information received from the external application to the MTC device. After the MTC device verifies whether the received information from the external application indicates a legal external application or not according to the stored security association between the external application and the MTC device and succeeds in verification, the SCEF receives confirmation information fed back by the MTC device.

In an implementation mode of the embodiment of the invention, the confirmation information includes information of the MTC device requested by the external application. The SCEF feeds back the requested information of the MTC device to the external application according to the received confirmation information.

In an implementation mode of the embodiment of the invention, a security association relationship between the external application and the MTC device is managed by an MTC user, or an operating company or an application provider.

In an implementation mode of the embodiment of the invention, the method further includes that the SCEF notifies the network entity to delete the security association relationship, stored on the MTC device, between the external application and the MTC device through the network entity.

In an implementation mode of the embodiment of the invention, the operation that the security association relationship, stored on the MTC device, between the external application and the MTC device, is deleted through the network entity includes that: the network entity receives deletion request information sent by the MTC user, or the operating company or the application provider, the deletion request information including the security association relationship required to be deleted between the external application and the MTC device on the specified MTC device. The network entity sends the deletion request information to the specified MTC device after authenticating the MTC user, or the operating company or the application provider. After receiving the deletion request information sent by the network entity, the specified MTC device checks all security association relationships, stored on the specified MTC device, between external applications and MTC devices, and deletes the corresponding security association relationship between the external application and the MTC device according to the deletion request information. After deletion is completed, the network entity receives deletion confirmation information fed back to the network entity by the specified MTC device.

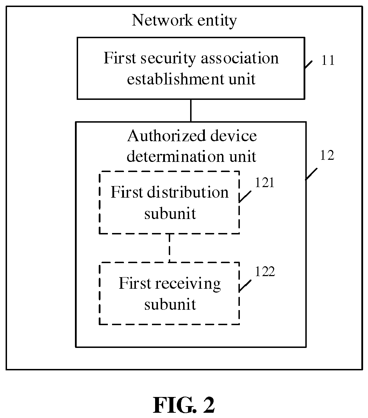

An embodiment of the invention provides a network entity. As shown in FIG. 2, the network entity is applied to an MTC system including MTC device under a service capability exposure architecture. The network entity includes: a first security association establishment unit 11, configured to establish a security association between an external application and the MTC device according to a preset rule after the network entity authenticates the external application; and an authorized device determination unit 12, configured to determine the MTC device authorized for the external application to access based on the security association between the external application and the MTC device to enable the external application to only acquire information of the MTC device authorized to access.

The authorized device determination unit 12 further includes: a first distribution subunit 121, configured to, after the network entity authenticates the external application and establishes the security association between the external application and the MTC device, send the security association between the external application and the MTC device to the corresponding MTC device to determine that the MTC device is authorized for the external application to access based on the security association between the external application and the MTC device.

The authorized device determination unit 12 further includes: a first receiving subunit 122, configured to, after the corresponding MTC device receives and locally stores the security association between the external application and the MTC device from the network entity, receive, by the network entity, confirmation information fed back by the corresponding MTC device.

In an implementation mode of the embodiment of the invention, the security association between the external application and the MTC device is an association relationship between the external application and the MTC device. The security association between the external application and the MTC device includes: an association relationship between identification information of the external application and identification information of the MTC device(for example, the International Mobile Equipment Identity (IMEI)), or a correspondence between the identification information of the external application and user identification information of the MTC device (for example, the International Mobile Subscriber Identity (IMSI)), or a correspondence between the identification information of the external application and identification information of an application on the MTC device.

In an implementation mode of the embodiment of the invention, the security association between the external application and the MTC device is configured to determine the MTC device authorized for the external application to access. The security association is established between one external application and one MTC device. Or, the security association is established between one external application and multiple MTC devices.

In an implementation mode of the embodiment of the invention, the network entity is: any network entity which may be configured to authenticate the external application in a core network. The network entity includes, but not limited to: an MME, or an SGSN, or an HSS, or an MTC-IWF, or an MTC service management platform, or an SCEF.

An embodiment of the invention provides an MTC device, which includes a second receiving unit, configured to receive a security association between an external application and the MTC device, the security association between the external application and the MTC device being established according to a preset rule after a network entity authenticates the external application; and a storage unit, configured to locally store the security association between the external application and the MTC device in the MTC device to determine the MTC device authorized for the external application to access based on the security association between the external application and the MTC device.

In an implementation mode of the embodiment of the invention, the security association between the external application and the MTC device is: an association relationship between the external application and the MTC device.

In an implementation mode of the embodiment of the invention, the security association between the external application and the MTC device includes: an association relationship between identification information of the external application and identification information of the MTC device, or a correspondence between the identification information of the external application and user identification information of the MTC device, or a correspondence between the identification information of the external application and identification information of an application on the MTC device.

In an implementation mode of the embodiment of the invention, the security association between the external application and the MTC device is configured to determine the MTC device authorized for the external application to access. The security association is established between one external application and one MTC device. Or, the security association is established between one external application and multiple MTC devices.

In an implementation mode of the embodiment of the invention, the MTC device further includes: a feedback unit, configured to, after the MTC device receives and locally stores the security association between the external application and the MTC device from the network entity, feed back confirmation information to the network entity.

An embodiment of the invention provides an SCEF, which is applied to an MTC system including the MTC device under a service capability exposure architecture. The SCEF, serving as an interface entity connected with a network entity, includes a second receiving unit, configured to receive request information of acquiring information of a specified MTC device from an external application, the request information including identity information of the external application and identity information of the MTC device; a security connection establishment unit, configured to authenticate the external application according to the identity information of the external application and the identity information of the MTC device, and after authentication succeeds, establish a security connection between the external application and the SCEF; and a first security association establishment unit, configured to establish a security association between the external application and the MTC device according to a preset rule to determine information of the MTC device authorized for the external application to access based on the security association between the external application and the MTC device to enable the external application to only acquire the information of the MTC device authorized to access.

In an implementation mode of the embodiment of the invention, the SCEF further includes a second distribution unit, configured to send, by the SCEF, the request information received from the external application to the MTC device; and a second receiving unit, configured to, after the MTC device verifies that the received information from the external application indicates a legal external application according to the stored security association between the external application and the MTC device and succeeds in verification, receive confirmation information fed back by the MTC device.

In an implementation mode of the embodiment of the invention, the confirmation information includes information of the MTC device requested by the external application The second distribution unit is further configured to feed back, by the SCEF, the requested information of the MTC device to the external application according to the received confirmation information.

In an implementation mode of the embodiment of the invention, the security association between the external application and the MTC device may is managed by an MTC user, or an operating company or an application provider.

In an implementation mode of the embodiment of the invention, the SCEF further includes: a notification unit, configured to notify, by the SCEF, the network entity to delete the security association, stored on the MTC device, between the external application and the MTC device through the network entity.

In an implementation mode of the embodiment of the invention, the SCEF performs communication connection with the network entity, the external application and the MTC device, the network entity includes a first receiving unit and a first distribution unit, and the MTC device includes a security association relationship storage and management unit. The first receiving unit is configured to receive, by the network entity, deletion request information sent by the MTC user, or the operating company or the application provider, the deletion request information including the security association required to be deleted between the external application and the MTC device on the specified MTC device.

The first distribution unit is configured to send the deletion request information to the specified MTC device after the network entity authenticates the MTC user, or the operating company or the application provider.

The security association relationship storage and management unit is configured to, after the specified MTC device receives the deletion request information sent by the network entity, check all security associations, stored on the specified MTC device, between external applications and MTC device, and delete the corresponding security association between the external application and the MTC device according to the deletion request information.

The first receiving unit is further configured to, after deletion is completed, receive, by the network entity, deletion confirmation information fed back to the network entity by the specified MTC device.

An embodiment of the invention provides an MTC system including MTC device under a service capability exposure architecture, which includes: the network entity in the abovementioned solution, the SCEF in the abovementioned solution, an external application communicating with the network entity through the SCEF and the MTC device communicating with the SCEF, the network entity and the external application respectively.

A scenario of security protection over MTC device under a service capability exposure architecture will be elaborated by adopting the following examples.

### Application example one

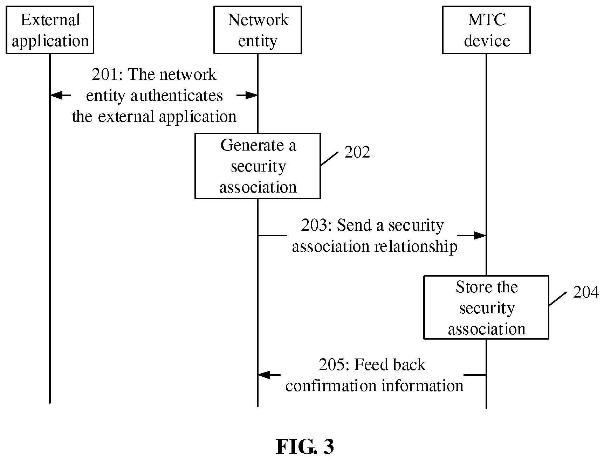

As shown in FIG. 3, a specific flow of a security association relationship list creation process in the invention includes the following steps.

In Step 201, a network entity authenticates an external application.

In Step 202, the network entity generates a security association between the external application and the MTC device after authenticating the external application. The security association between the external application and the MTC device refers to an association relationship between the external application and the MTC device, and may specifically be an association relationship between identity information of the external application and identity information of the MTC device, for example, an association relationship between the identification information of the external application and the identification information of the MTC device (for example, an IMEI), or a correspondence between the identification information of the external application and user identification information of the MTC device (for example, the IMSI), or a correspondence between the identification information of the external application and identification information of an application on the MTC device. The security association between the external application and the MTC device is configured to determine the MTC device authorized for the external application to access. For the external application, there may be multiple authorized MTC devices, that is, the external application may establish security associations with multiple MTC devices.

In Step 203, the network entity sends a generated security association relationship between the external application and the MTC device to the corresponding MTC device after establishing the security association between the external application and the MTC device.

In Step 204, after receiving the security association relationship between the external application and the MTC device from the network entity, the MTC device stores the security association relationship on the MTC device, for example, storing on a UICC or storing in a memory on the MTC device.

In Step 205, the MTC device feeds back confirmation information to the network entity after receiving and storing the security association relationship between the external application and the MTC device.

### Application example two

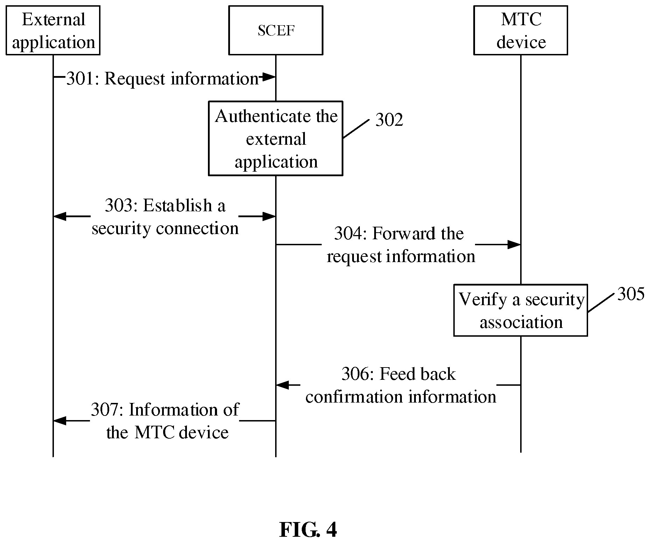

As shown in FIG. 4, a specific flow of acquiring information of an MTC device by an external application through an SCEF includes the following steps.

In Step 301, the external application sends request information of acquiring information of a specified MTC device to the SCEF, the request information including identity information of the external application and identity information of the MTC device.

In Step 302, the SCEF authenticates the external application.

In Step 303, after authentication succeeds, the external application establishes a security connection with the SCEF.

In Step 304, the SCEF further sends the request information received from the external application to the MTC device.

In Step 305, the MTC device verifies whether the received information of the external application indicates a legal external application or not according to a stored security association relationship between the MTC device and the external application.

In Step 306, after verification succeeds, the MTC device feeds back confirmation information to the SCEF. Herein, the confirmation information may include the information of the MTC device requested by the external application.

In Step 307, the SCEF feeds back the requested MTC device information to the external application according to the received confirmation information.

### Application example three

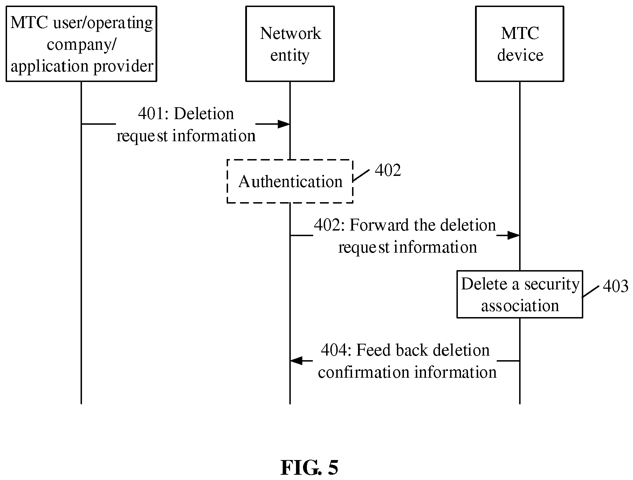

As shown in FIG. 5, a flow of a security association deletion process in the invention includes the following steps.

In Step 401, an MTC user, or an operating company or an application provider sends deletion request information to a network entity, the deletion request information including a security association relationship required to be deleted between an external application and the MTC device on the specified MTC device.

In Step 402, the network entity sends the deletion request information to the specified MTC device after authenticating the MTC user, or the operating company or the application provider.

In Step 403, after receiving the deletion request information sent by the network entity, the MTC device checks all security association relationships, stored on the MTC device, between external applications and MTC devices, and deletes the corresponding security association relationship between the external application and the MTC device according to the request.

In Step 404, after deletion is completed, the MTC device feeds back deletion confirmation information to the network entity.

### Application example four

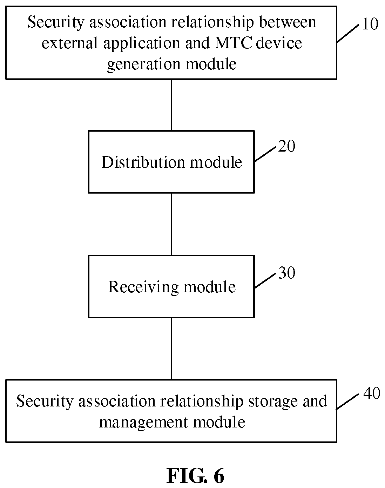

As shown in FIG. 6, a specific example of a security association management device based on a network entity of the invention includes the following modules.

An external application and MTC device security association relationship generation module 10 is configured to generate a security association relationship between an MTC device and an external application.

A distribution module 20 is configured to distribute the security association relationship between the MTC device and the external application, or distribute deletion request information, or distribute MTC device information acquisition request information.

A receiving module 30 is configured to receive the security association relationship between the MTC device and the external application or receive the deletion request information.

A security association relationship storage and management module 40 is configured to manage and maintain the security association relationship between the external application and the MTC device.

### Application example five

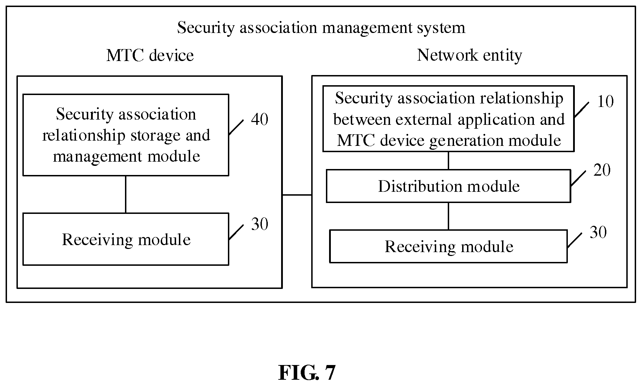

As shown in FIG. 7, a specific example of a security association management system based on a network entity and an MTC device of the invention includes the MTC device and the network entity. For the MTC device, the MTC device is configured to manage and maintain a security association relationship between an external application and the MTC device. The MTC device includes: a security association relationship storage and management module 40, configured to manage and maintain the security association relationship between the external application and the MTC device. The MTC device further includes a receiving module 30. For the network entity, the network entity is configured to create and distribute the security association relationship between the external application and the MTC device. The network entity includes: an external application and MTC device security association relationship generation module 10, configured to generate the security association relationship between the MTC device and the external application. The network entity further includes: a distribution module 20, configured to distribute the security association relationship between the MTC device and the external application, or distribute deletion request information, or distribute MTC device information acquisition request information. The network entity further includes: a receiving module 30, configured to receive the security application relationship between the MTC device and the external application or receive the deletion request information.

From the technical solutions, it can be seen that the application scenario applying the embodiments of the invention is a practicable security management protection method for protecting the MTC device. Moreover, since each of MTC devices manages and maintains a security association relationship between a related external application and the MTC device, the network entity may be prevented from consuming a large amount of resources to process the problem of illegal acquisition of MTC device information by external applications, and utilization efficiency of network resources is improved.

When being implemented in form of software function module and sold or used as an independent product, the integrated units of the embodiments of the invention may also be stored in a computer-readable storage medium. Based on such an understanding, the technical solutions of the embodiments of the invention substantially or parts making contributions to a conventional art may be embodied in form of software product, and the computer software product is stored in a storage medium, including a plurality of instructions configured to enable a device (which may be a personal computer, a server, network device or the like) to execute all or part of the method in each of the embodiments of the invention. The storage medium includes: various media capable of storing program codes such as a U disk, a mobile hard disk, a Read-Only Memory (ROM), a Random Access Memory (RAM), a magnetic disk or an optical disk. Therefore, the embodiments of the invention are not limited to any specified hardware and software combination.

Correspondingly, the embodiments of the invention further provide a computer storage medium, in which a computer program is stored, the computer program being configured to execute a method for protecting an MTC device in a service capability exposure architecture in the embodiments of the invention.

The above is only the preferred embodiment of the invention and not intended to limit the scope of protection of the invention.

### INDUSTRIAL APPLICABILITY

With adoption of the embodiments of the invention, since it may be determined that the MTC device is authorized for the external application to access based on the established security association between the external application and the MTC device to enable the external application to acquire the information of the MTC device authorized to access, a distributed security solution for MTC device information protection is well implemented.

## Claims

1. A method for protecting a Machine Type Communication, MTC, device, applied to an MTC system comprising the MTC device under a service capability exposure architecture, the method comprising:
establishing, by a network entity, a security association between an external application and the MTC device according to a preset rule after authenticating the external application; and
sending, by the network entity, the security association between the external application and the MTC device to the MTC device to determine that the MTC device is authorized for the external application to access based on the security association between the external application and the MTC device.

2. The method according to claim 1, wherein the security association between the external application and the MTC device is: an association relationship between the external application and the MTC device.

3. The method according to claim 2, wherein the security association between the external application and the MTC device comprises: an association relationship between identification information of the external application and identification information of the MTC device, or a correspondence between the identification information of the external application and user identification information of the MTC device, or a correspondence between the identification information of the external application and identification information of an application on the MTC device.

4. The method according to claim 1, wherein the security association between the external application and the MTC device is configured to determine that the MTC device is authorized for the external application to access;
the security association is established between one external application and one MTC device; or,
the security association is established between one external application and multiple MTC devices.

5. The method according to claim 4, further comprising:
after the MTC device receives and locally stores the security association between the external application and the MTC device from the network entity, receiving, by the network entity, confirmation information fed back by the MTC device.

6. The method according to claim 5, wherein the network entity is: any network entity configurable to authenticate the external application in a core network; and
the network entity comprises: a Mobility Management Entity, MME, or a Serving General Packet Radio Service Support Node, SGSN, or a Home Subscriber Server, HSS, or an MTC-Interworking Function, MTC-IWF, or an MTC service management platform, or a Service Capability Exposure Function, SCEF.

7. A method for protecting a Machine Type Communication, MTC, device, applied to an MTC system comprising the MTC device under a service capability exposure architecture, the method comprising:
receiving, by the MTC device, a security association between an external application and the MTC device, the security association between the external application and the MTC device being established according to a preset rule after a network entity authenticates the external application; and
locally storing, by the MTC device, the security association between the external application and the MTC device to determine that the MTC device is authorized for the external application to access based on the security association between the external application and the MTC device.

8. The method according to claim 7, wherein the security association between the external application and the MTC device is: an association relationship between the external application and the MTC device.

9. The method according to claim 8, wherein the security association between the external application and the MTC device comprises: an association relationship between identification information of the external application and identification information of the MTC device, or a correspondence between the identification information of the external application and user identification information of the MTC device, or a correspondence between the identification information of the external application and identification information of an application on the MTC device.

10. The method according to claim 7, wherein the security association between the external application and the MTC device is configured to determine that the MTC device is authorized for the external application to access;
the security association is established between one external application and one MTC device; or,
the security association is established between one external application and multiple MTC devices.

11. The method according to claim 10, further comprising:
feeding back, by the MTC device, confirmation information to the network entity after receiving and locally storing the security association between the external application and the MTC device from the network entity.

12. A method for protecting a Machine Type Communication, MTC, device, applied to an MTC system comprising the MTC device under a service capability exposure architecture, the method comprising:
receiving, by a Service Capability Exposure Function, SCEF, serving as an interface entity connected with a network entity, request information of acquiring information of a specified MTC device from an external application, the request information comprising identity information of the external application and identity information of the MTC device;
authenticating, by the SCEF, the external application according to the identity information of the external application and the identity information of the MTC device, and after authentication succeeds, establishing a security connection between the external application and the SCEF; and
establishing, by the SCEF, a security association between the external application and the MTC device according to a preset rule to determine that the MTC device is authorized for the external application to access based on the security association between the external application and the MTC device.

13. The method according to claim 12, further comprising:
sending, by the SCEF, the request information received from the external application to the MTC device; and
after the MTC device verifies that the received information from the external application indicates a legal external application according to the stored security association between the external application and the MTC device and succeeds in verification, receiving, by the SCEF, confirmation information fed back by the MTC device.

14. The method according to claim 13, wherein the confirmation information comprises information of the MTC device requested by the external application; and
the SCEF feeds back the requested information of the MTC device to the external application according to the received confirmation information.

15. The method according to any one of claims 12-14, wherein the security association between the external application and the MTC device is managed by an MTC user, or an operating company or an application provider.

16. The method according to claim 15, further comprising:
notifying, by the SCEF, the network entity to delete the security association, stored on the MTC device, between the external application and the MTC device through the network entity.

17. The method according to claim 16, wherein deleting the security association, stored on the MTC device, between the external application and the MTC device, through the network entity comprises:
receiving, by the network entity, deletion request information sent by the MTC user, or the operating company or the application provider, the deletion request information comprising the security association required to be deleted between the external application and the MTC device on the specified MTC device;
sending, by the network entity, the deletion request information to the specified MTC device after authenticating the MTC user, or the operating company or the application provider;
after receiving the deletion request information sent by the network entity, checking, by the specified MTC device, all security associations, stored on the specified MTC device, between external applications and MTC devices, and deleting the security association between the external application and the MTC device according to the deletion request information; and
after deletion is completed, receiving, by the network entity, deletion confirmation information fed back to the network entity by the specified MTC device.

18. A network entity, applied to a Machine Type Communication, MTC, system comprising an MTC device under a service capability exposure architecture and comprising:
a first security association establishment unit, configured to establish a security association between an external application and the MTC device according to a preset rule after authenticating the external application; and
an authorized device determination unit, configured to send the security association between the external application and the MTC device to the MTC device to determine that the MTC device is authorized for the external application to access based on the security association between the external application and the MTC device.

19. The network entity according to claim 18, wherein the security association between the external application and the MTC device is: an association relationship between the external application and the MTC device.

20. The network entity according to claim 19, wherein the security association between the external application and the MTC device comprises: an association relationship between identification information of the external application and identification information of the MTC device, or a correspondence between the identification information of the external application and user identification information of the MTC device, or a correspondence between the identification information of the external application and identification information of an application on the MTC device.

21. The network entity according to claim 18, wherein the security association between the external application and the MTC device is configured to determine that the MTC device is authorized for the external application to access;
the security association is established between one external application and one MTC device; or,
the security association is established between one external application and multiple MTC devices.

22. The network entity according to claim 21, wherein the authorized device determination unit comprises:
a first receiving subunit, configured to receive confirmation information fed back by the MTC device after the MTC device receives and locally stores the security association between the external application and the MTC device from the network entity.

23. The network entity according to claim 22, wherein the network entity is: any network entity configurable to authenticate the external application in a core network; and
the network entity comprises: a Mobility Management Entity, MME, or a Serving General Packet Radio Service Support Node, SGSN, or a Home Subscriber Server, HSS, or an MTC-Interworking Function, MTC-IWF, or an MTC service management platform, or a Service Capability Exposure Function, SCEF.

24. A Machine Type Communication, MTC, device, comprising:
a second receiving unit, configured to receive a security association between an external application and the MTC device, the security association between the external application and the MTC device being established according to a preset rule after a network entity authenticates the external application; and
a storage unit, configured to locally store the security association between the external application and the MTC device in the MTC device to determine that the MTC device is authorized for the external application to access based on the security association between the external application and the MTC device.

25. The MTC device according to claim 24, wherein the security association between the external application and the MTC device is: an association relationship between the external application and the MTC device.

26. The MTC device according to claim 25, wherein the security association between the external application and the MTC device comprises: an association relationship between identification information of the external application and identification information of the MTC device, or a correspondence between the identification information of the external application and user identification information of the MTC device, or a correspondence between the identification information of the external application and identification information of an application on the MTC device.

27. The MTC device according to claim 24, wherein the security association between the external application and the MTC device is configured to determine that the MTC device is authorized for the external application to access;
the security association is established between one external application and one MTC device; or,
the security association is established between one external application and multiple MTC devices.

28. The MTC device according to claim 27, further comprising:
a feedback unit, configured to feed back confirmation information to the network entity after the MTC device receives and locally stores the security association between the external application and the MTC device from the network entity.

29. A Service Capability Exposure Function, SCEF, applied to a Machine Type Communication, MTC, system comprising an MTC device under a service capability exposure architecture, the SCEF serving as an interface entity connected with a network entity and comprising:
a second receiving unit, configured to receive request information of acquiring information of a specified MTC device from an external application, the request information comprising identity information of the external application and identity information of the MTC device;
a security connection establishment unit, configured to authenticate, by the SCEF, the external application according to the identity information of the external application and the identity information of the MTC device, and after authentication succeeds, establish a security connection between the external application and the SCEF; and
a first security association establishment unit, configured to establish a security association between the external application and the MTC device according to a preset rule to determine that the MTC device is authorized for the external application to access based on the security association between the external application and the MTC device.

30. The SCEF according to claim 29, further comprising:
a second distribution unit, configured to send, by the SCEF, the request information received from the external application to the MTC device; and
a second receiving unit, configured to receive confirmation information fed back by the MTC device, after the MTC device verifies that the received information from the external application indicates a legal external application according to the stored security association between the external application and the MTC device and succeeds in verification.

31. The SCEF according to claim 30, wherein the confirmation information comprises information of the MTC device requested by the external application; and
the second distribution unit is further configured to feed back the requested information of the MTC device to the external application according to the received confirmation information.

32. The SCEF according to any one of claims 29-31, wherein the security association between the external application and the MTC device is managed by an MTC user, or an operating company or an application provider.

33. The SCEF according to claim 32, further comprising:
a notification unit, configured to notify the network entity to delete the security association, stored on the MTC device, between the external application and the MTC device through the network entity.

34. The SCEF according to claim 33, wherein the SCEF performs communication connection with the network entity, the external application and the MTC device, the network entity comprises a first receiving unit and a first distribution unit, and the MTC device comprises a security association relationship storage and management unit, wherein
the first receiving unit is configured to receive, by the network entity, deletion request information sent by the MTC user, or the operating company or the application provider, the deletion request information comprising the security association required to be deleted between the external application and the MTC device on the specified MTC device;
the first distribution unit is configured to send the deletion request information to the specified MTC device after the network entity authenticates the MTC user, or the operating company or the application provider;
the security association relationship storage and management unit is configured to, after the specified MTC device receives the deletion request information sent by the network entity, check all security associations, stored on the specified MTC device, between external applications and MTC devices, and delete the security association between the external application and the MTC device according to the deletion request information; and
the first receiving unit is further configured to, after deletion is completed, receive, by the network entity, deletion confirmation information fed back to the network entity by the specified MTC device.
